## Europäisches Patentamt
## European Patent Office
## Office européen des brevets

(19)

(11) Numéro de publication: **0 237 459**
**B1**

(12)

# FASCICULE DE BREVET EUROPEEN

(45) Date de publication du fascicule du brevet:
**18.10.89**

(51) Int. Cl.⁴: **B29C 49/64, B29C 49/16**

(21) Numéro de dépôt: **87470004.0**

(22) Date de dépôt: **16.02.87**

(54) **Procédé et installation pour fabriquer des récipients, tels que des bouteilles, en polyéthylènetéréphtalate résistant à des conditions thermiques relativement sévères au cours de leur utilisation.**

(30) Priorité: **04.03.86 FR 8603013**

(43) Date de publication de la demande:
**16.09.87 Bulletin 87/38**

(45) Mention de la délivrance du brevet:
**18.10.89 Bulletin 89/42**

(84) Etats contractants désignés:
**DE GB IT NL**

(56) Documents cités:
**EP-A- 0 066 982**
**EP-A- 0 155 763**
**DE-A- 2 704 657**
**FR-A- 2 289 320**
**FR-A- 2 389 478**
**FR-A- 2 539 076**
**GB-A- 2 108 899**
**GB-A- 2 156 732**

**PATENT ABSTRACTS OF JAPAN,**
**vol. 6, no. 126 (M-142)[1004], 10 juillet 1982; &**
**JP-A-57 53 326 (DAINIPPON INSATSU K.K.) 30-03-1982**
**PATENT ABSTRACTS OF JAPAN,**
**vol. 5, no. 187 (M-98)[859], 26 novembre 1981; &**
**JP-A-56 105 935 (MITSUBISHI JUSHI K.K.) 22-08-1981**

(73) Titulaire: **SIDEL, 55, rue du Pont VI, F- 76053 Le Havre Cedex(FR)**

(72) Inventeur: **Denis, Gérard, 22, rue Georges Pompidou, F-76280 Turretot(FR)**
Inventeur: **Rius, Jean-Michel, Le Clos du Puits 18, Allée St. Léonard, F-76610 Le Havre(FR)**

(74) Mandataire: **Puit, Thierry et al, c/o Centre de Recherches de Pont-à-Mousson B.P. 28, F-54703 Pont-à-Mousson Cedex(FR)**

ACTORUM AG

## Description

La présente invention concerne un procédé et une installation pour fabriquer des récipients, tels que des bouteilles, en polyéthylènetéréphtalate (PET) aptes à supporter en cours d'utilisation, sans déformations notables, des conditions thermiques relativement sévères.

Les récipients en PET sont actuellement largement utilisés pour la commercialisation de certains liquides contenant des gaz tels que du $CO_2$ (par exemple limonades, sodas, jus de fruits gazeux, etc..). Toutefois, en raison de leur processus de fabrication, ces récipients ne peuvent pas subir sans déformations notables des conditions thermiques relativement sévères telles que des températures élevées pouvant aller jusqu'à 95°C comme rencontrées lors du remplissage du récipient par un liquide chaud ou telles que des températures moyennement élevées (60 à 80°C) maintenues pendant une durée assez longue (1 à 2 heures) comme rencontrées lors de la pasteurisation du contenu liquide du récipient. Toutes conditions qui sont rencontrées au cours du conditionnement de certains liquides plats (tels que les jus de fruits non carbonatés) ou de certains liquides gazeux (tels que la bière).

Des tentatives ont été faites pour tenter de remédier à ces inconvénients et d'adapter les récipients en PET au stockage de certains produits tels que les jus de fruits carbonatés ou non ou la bière. C'est ainsi qu'ont été réalisées des bouteilles en PET qui supportent un remplissage d'un liquide chaud, à une température de l'ordre de 85°C, avec une déformation relativement faible qui demeure acceptable. On peut estimer, à ce sujet, que le remplissage à chaud entraîne, pour le récipient, un choc thermique relativement bref, de l'ordre de quelques minutes, et que la relativement faible déformation est uniquement limitée par la brièveté du phénomène thermique.

De fait, l'expérience a prouvé que ces récipients connus ne pouvaient pas supporter le processus de pasteurisation de leur contenu liquide (processus conduit d'une façon générale à une température inférieure à 85°C; cette température varie en fonction de la teneur en $CO_2$, par exemple depuis 78°C pour un liquide contenant 3,5g/litre de $CO_2$ jusqu'à 65°C pour liquide contenant 6g/litre de $CO_2$, pour une durée de traitement d'une heure sans être déformés d'une manière inacceptable (variation en volume de 30% et plus).

L'invention a donc essentiellement pour but de remédier aux inconvénients exposés ci-dessus et de proposer un procédé et une installation qui permettent de fabriquer des récipients, tels que des bouteilles, en PET qui, en cours d'utilisation, soient aptes à supporter des conditions thermiques relativement sévères (par exemple températures de 60 à 95°C) susceptibles d'être maintenues pendant des durées relativement longues (par exemple au moins une heure) comme cela peut se rencontrer dans certains processus comme le remplissage avec un liquide chaud ou la pasteurisation de leur contenu liquide, le liquide en question pouvant contenir du gaz carbonique (cas de la bière).

On connaît par EP-A 0 155 763 un procédé du genre précité qui comprend la succession des étapes suivantes:

a) sur une préforme du récipient constituée en PET amorphe, avec le goulot du récipient déjà conformé à sa forme et à ses dimensions définitives, on effectue un traitement thermique du seul goulot dans des conditions de température et de durée propres à assurer la cristallisation du PET deu goulot;

b) on chauffe le corps seul de la préforme (en excluant le goulot) à une température au moins égale à la température de ramollissement du PET;

c) on moule le corps de préforme chaud pour constituer un récipient intermédiaire;

d) on chauffe ensuite le corps seul du récipient intermédiaire;

e) puis enfin, le récipient intermédiaire chaud est moulé une nouvelle fois à sa forme et à ses dimensions définitives.

Le procédé, selon l'invention, est caractérisé en ce que:

– on moule un corps de préforme chaud pour constituer un récipient intermédiaire dont le corps possède des dimensions supérieures d'environ 20% en hauteur et de 0 à 30% transversalement aux dimensions du récipient définitif à ovtenir, les parois de conformation par moulage du récipient intermédiaire étant refroidies à une température d'environ 5 à 40°C;

– on chauffe ensuite le corps seul du récipient intermédiaire, pour obtenir un récipient chaud, à une température de 180 à 220°C pendant une durée d'environ 1 à 15 minutes;

– puis enfin, le récipient chaud est moulé une nouvelle fois à sa forme et à ses dimensions définitives pendant une durée de 1 à 6 secondes, les parois de conformation par moulage du récipient définitif étant à une température de 80 à 100°C.

De préférence, on peut en outre avoir recours à l'une et/ou à l'autre des dispositions qui suivent:

– au cours de l'étape b), la température est d'environ 100 à 120°C, pendant une durée de 10 à 60 secondes, de préférence pendant environ 25 secondes;

– le moulage effectué à l'étape e) se déroule sous une température de 90 à 95°C pendant environ 4 secondes;

– au cours de l'étape d), le goulot est maintenu à une température n'excédant pas 80°C, de préférence à une température d'environ 70°C;

– l'opération de moulage de l'étape c) est menée pendant une durée de 3 à 10 secondes, avec les parois de conformation par moulage refroidies à une température d'environ 10 à 15°;

– au cours des opérations de moulage des étapes c) et e), on allonge mécaniquement le corps de la préforme ou du récipient, respectivement, pour qu'il occupe axialement toute la longueur de la matrice de moulage et on insuffle un fluide sous pression pour le dilater et lui faire épouser le contour des parois de la matrice de moulage.

Un récipient fabriqué conformément au procédé de l'invention possède les propriétés recherchées en ce qui concerne sa bonne tenue dans un environnement thermique relativement sévère. Il s'agit en particulier de sa bonne tenue au cours d'un processus de remplissage à chaud à des températures pouvant aller jusqu'à 95°C, le récipient de l'invention se déformant alors sensiblement moins que les récipients fabriqués selon des procédés antérieurs ; à titre d'exemple, des bouteilles obtenues conformément à l'invention subissent, au cours d'un remplissage à chaud à une température de 93 à 95°C, une variation de volume inférieure à 5 %, de façon typique de l'ordre de 2 %.

Les considérations de bonne tenue en température s'appliquent surtout, de façon particulièrement intéressante, au processus de pasteurisation du contenu liquide du récipient, lequel liquide peut contenir du $CO_2$. Il est alors nécessaire que le récipient puisse supporter, sans déformation notable, des conditions thermiques relativement sévères, de l'ordre de 60°C à 85°C, pendant des durées relativement longues de l'ordre de 1 à 2 heures. A titre d'exemple, le processus de pasteurisation d'un liquide contenant du $CO_2$ doit être conduit pendant une durée d'une heure aux températures suivantes :

- environ 78°C si le liquide contient 3,5 g de $CO_2$/litre
- environ 75°C si le liquide contient 4,5 g de $CO_2$/litre
- environ 70-72°C si le liquide contient 5,5 g de $CO_2$/litre,
- environ 65°C si le liquide contient 6,0 g de $CO_2$/litre

A titre de comparaison, on peut indiquer les deux exemples suivants :
-- une bouteille de l'art antérieur, d'une contenance de 1,5 litre, est réalisée en un matériau connu sous l'appelation ICI B90S, en mettant en oeuvre un procédé connu ; elle est remplie du liquide contenant 6 g de $CO_2$/litre, et l'on soumet l'ensemble de la bouteille remplie du liquide à un processus de pasteurisation à 70°C pendant 2 heures au terme duquel la bouteille s'est considérablement déformée (accroissement de volume d'environ 35 %) et doit être rejetée ;
-- une bouteille conforme à l'invention, de mêmes caractéristiques et constituée du même matériau, est réalisée par mise en oeuvre du procédé de l'invention ; elle est remplie du même liquide et subit le même traitement, au terme duquel la déformation de la bouteille est relativement faible (accroissement de volume d'environ 6,5 %) et reste acceptable.

Selon les analyses effectuées par la Demanderesse, les caractéristiques avantageuses d'un récipient produit par mise en oeuvre du procédé de l'invention, par comparaison avec un récipient produit selon un procédé classique, tiennent essentiellement de façon vraisemblable, aux deux moulages successifs effectués à des températures respectivement faibles et moyennes et précédés respectivement par des traitements thermiques à des températures élevées mais distinctes des opérations de moulage ; cet échelonnement d'opérations procure deux biorientations cristallines distinctes du matériau, ce qui renforce considérablement la résistance mécanique du récipient placé ultérieurement dans des conditions thermiques sévères, alors que la mise en oeuvre des procédés classiques, avec un seul ou deux processus de moulage menés à des températures très élevées, ne procure qu'une seule biorientation cristalline du matériau qui est insuffisante pour conférer la résistance thermique souhaitable lors de son utilisation.

Par ailleurs, un second aspect de l'invention porte sur une installation permettant de fabriquer des récipients tels que des bouteilles en polyéthylènetéréphtalate (PET) aptes à subir, ultérieurement, sans déformations notables, des conditions thermiques relativement sévères qui comprend :
- un premier dispositif de chauffage agencé pour chauffer le seul goulot, déjà conformé à sa forme et à ses dimensions définitives, d'une préforme du récipient constituée en PET amorphe, ce dispositif de chauffage étant apte à engendrer une température propre à assurer la cristallisation du PET du goulot et étant en outre agencé pour assurer une protection thermique du corps du récipient afin d'empêcher son échauffement ;
- des moyens de refroidissement relativement lent du goulot ;
- un deuxième dispositif de chauffage pour chauffer le corps seul de la préforme (à l'exclusion du goulot) à une température supérieure à la température de ramollissement du PET ;
- une première matrice de moulage pour former le corps d'un récipient intermédiaire à partir du corps de la préforme, la première matrice de moulage possédant une cavité de moulage ayant des dimensions supérieures d'environ 20 % en hauteur et de 0 à 30 % transversalement aux dimensions du récipient définitif à obtenir, cette première matrice étant équipée de moyens de refroidissement des parois de la cavité à une température d'environ 5 à 40°C ;
- un troisième dispositif de chauffage pour chauffer le corps seul du récipient intermédiaire (à l'exclusion du goulot) à une température d'environ 180 à 220°C ; et
- une seconde matrice de moulage pour former le corps du récipient définitif à partir du corps chauffé du récipient intermédiaire, cette seconde matrice de moulage possédant une cavité de moulage ayant les dimensions correspondant à celles du corps du récipient définitif et étant munie de moyens de chauffage des parois de la cavité à une température d'environ 80 à 100°C.

De façon avantageuse, on peut en outre avoir recours à l'une et/ou à l'autre des dispositions complémentaires qui suivent :
- au premier et/ou au deuxième et/ou au troisième dispositif de chauffage sont associés des moyens de protection thermique, et éventuellement des moyens de refroidissement, agencés pour protéger thermiquement la partie (goulot ou corps) du récipient qui ne doit pas être traitée thermiquement,
- la première et/ou la seconde matrice de moulage peut comporter un mandrin déplaçable axialement à l'intérieur de la cavité de moulage afin d'allonger longitudinalement le corps du récipient, ainsi que des moyens d'insufflation d'un fluide sous pression à l'intérieur du corps du récipient afin de dilater celui-ci contre les parois de la cavité de moulage.

L'installation conforme à l'invention présente l'avantage de partir de préformes de récipients déjà existantes, sans modifications et/ou adaptations de ces préformes ou de leur cycle de production par moulage par injection ; de conserver la matière première déjà utilisée antérieurement pour la fabrication de récipients, notamment de bouteilles destinés à contenir des liquides renfermant des gaz dissous ($CO_2$) ; de conserver sensiblement le même poids de matière première par récipient unitaire ; et simultanément d'autoriser des cadences de production très élevées, par exemple de l'ordre de 5000 bouteilles par heure, voire plus encore, sans qu'il en résulte d'inconvénients notoires, notamment quant aux coûts d'achat et d'entretien des matériels au coût unitaire des récipients, etc ...

L'invention sera mieux comprise à la lecture de la description détaillée qui suit dans laquelle on se réfère aux dessins annexés sur lesquels:

— les figures 1A à 1C illustrent, dans l'ordre, schématiquement différentes opérations successives du procédé conformes à l'invention;
— les figures 2A et 2B représentent ensembles, schématiquement, en vue de dessus, une installation conforme à l'invention, différents postes successifs de cette installation correspondant à des opérations représentées aux figures 1A à 1C; et
— la figure 3 représente une même bouteille obtenue conformément à l'invention à différents stades de sa fabrication, en correspondance avec des postes de l'installation des figures 2A et 2B et avec des opérations du procédé des figures 1A à 1C.

En se référant maintenant à l'ensemble des figures, la mise en œuvre de l'invention est effectuée en partant d'une préforme de bouteille 1 obtenue, d'une façon en soi connue, par une opération de moulage par injection de polyéthylènetéréphtalate (PET), par exemple le produit commercialisé sous la dénomination ICI 8905; à ce stade initial, le PET est amorphe et l'ensemble de la préforme est transparent; il faut noter également que la préforme est moulée avec un goulot 2 présentant sa forme exacte et ses dimensions définitives.

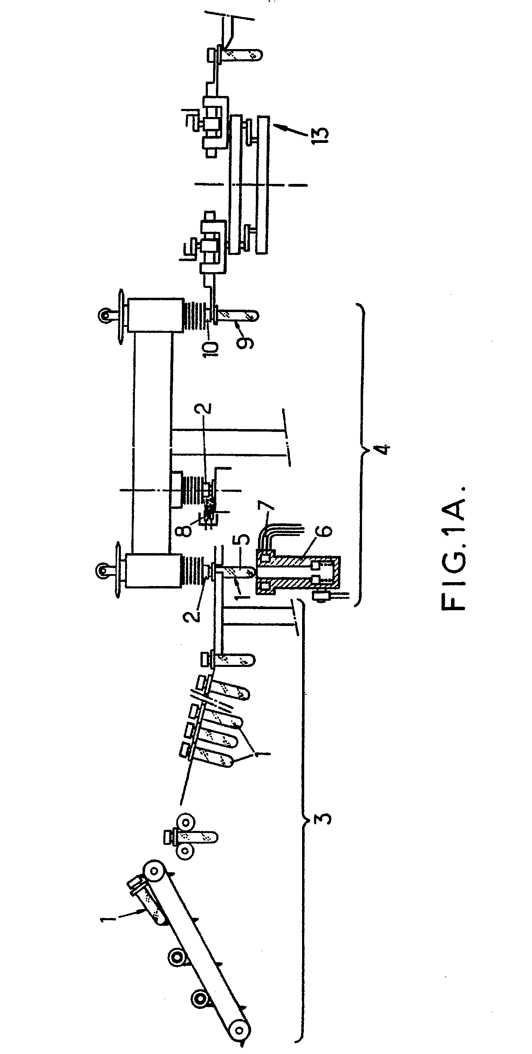

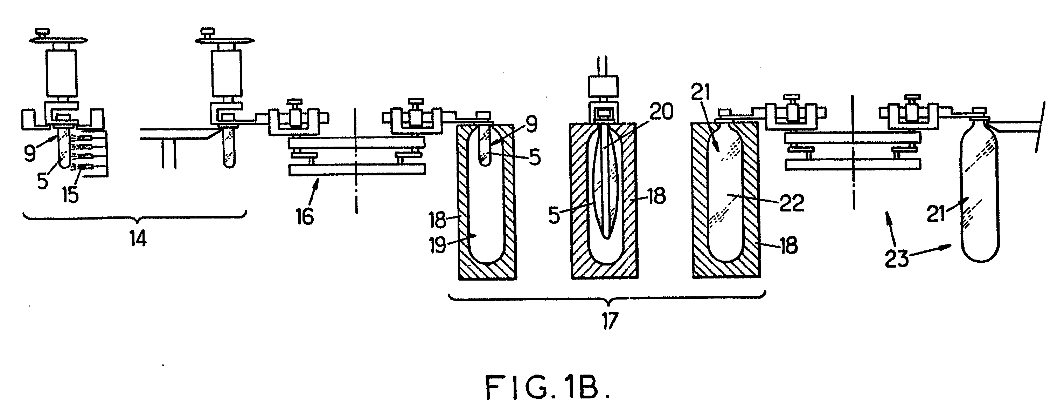

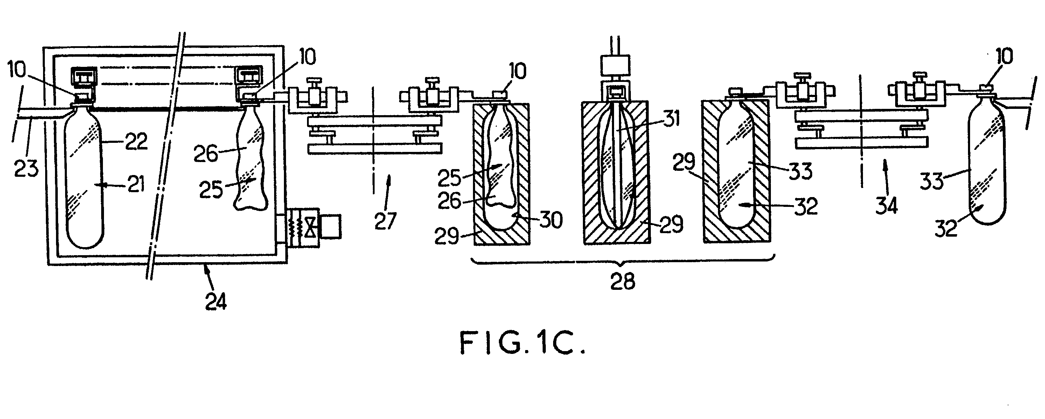

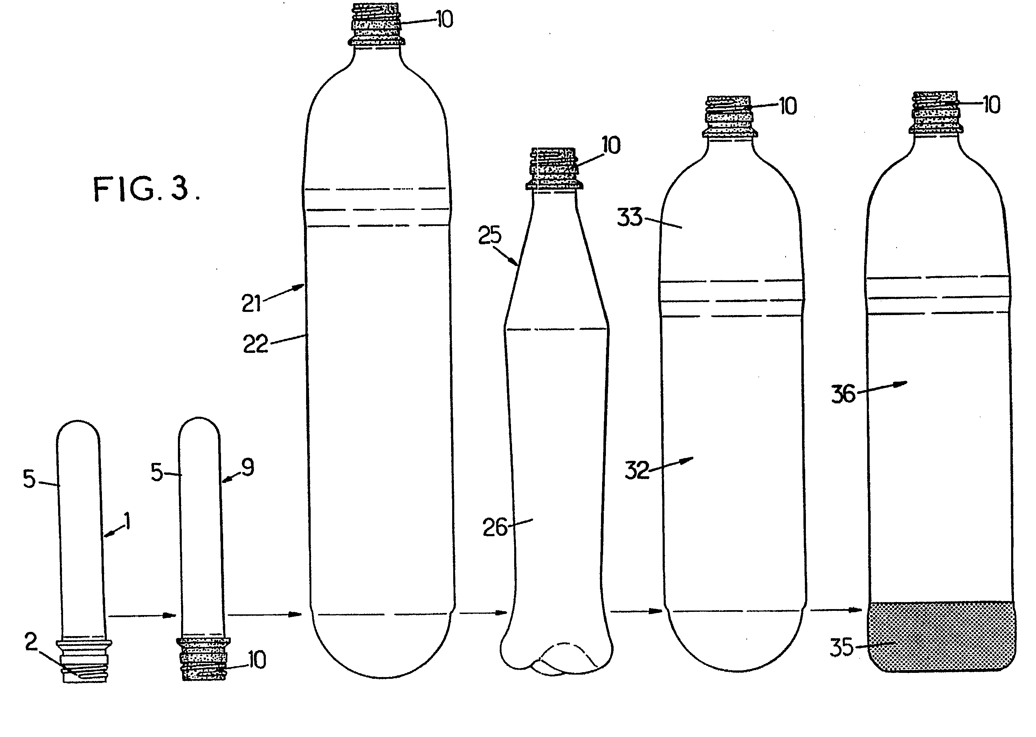

Les préformes 1 en provenance d'une réserve (non représentée) sont orientées et acheminées par un dispositif transporteur 3 jusqu'à un premier poste 4 de chauffage pour le traitement thermique du seul goulot 2 des préformes. Le corps 5 de chaque préforme est introduit dans une jupe protectrice 6 qui peut avantageusement être parcourue par un courant de fluide (gazeux et/ou liquide) de refroidissement (en 7 sur la figure 1A). Le goulot 2 de la préforme reste par contre extérieur à la jupe protectrice 6 et on fait pénétrer en son intérieur un mandrin (non visible sur la figure) pour le soutenir physiquement au cours du traitement thermique subséquent. Durant celui-ci, le goulot 2 est exposé à un dispositif de chauffage par infra-rouge 8 pour être porté à une température d'au moins 190°C (température de cristallisation du PET) ; de préférence, pour accroître la cadence de production sans augmentation inconséquente des dimensions de l'installation, le chauffage est effectué à une température de 190° à 210°C pendant une durée d'environ 1mn. Ce traitement provoque la cristallisation du PET (qui devient blanchâtre) du goulot qui, devenu mécaniquement résistant, va pouvoir être utilisé comme partie de préhension et d'ancrage pour les opérations subséquentes. On effectue ensuite un refroidissement relativement lent (de l'ordre de 20 secondes) afin d'assurer la conservation de l'état cristallin, pour obtenir une préforme 9 à goulot en PET cristallisé 10 (figure 3).

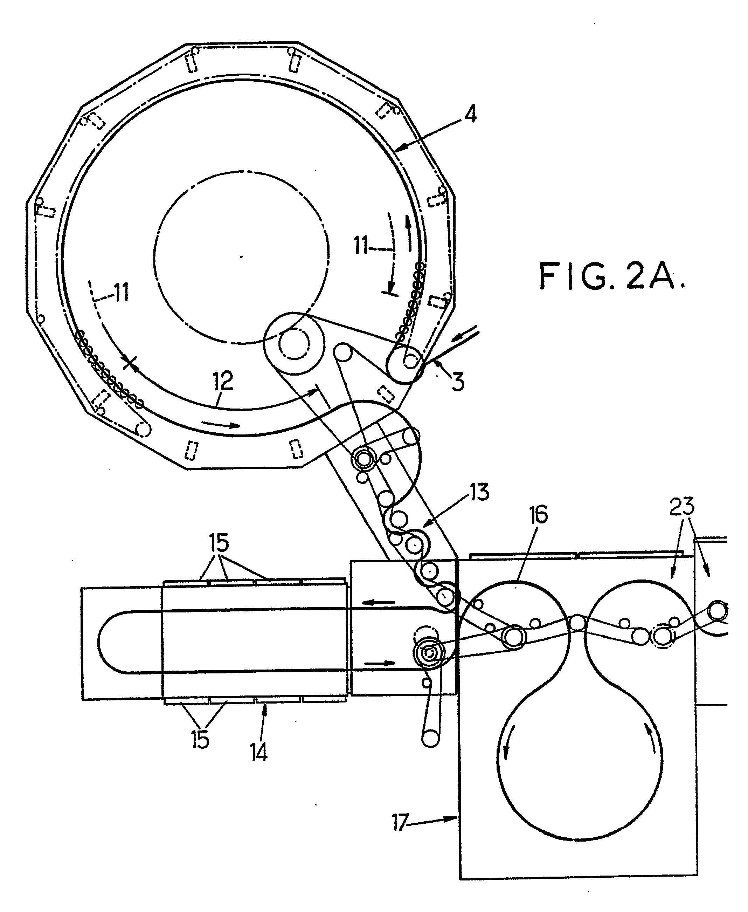

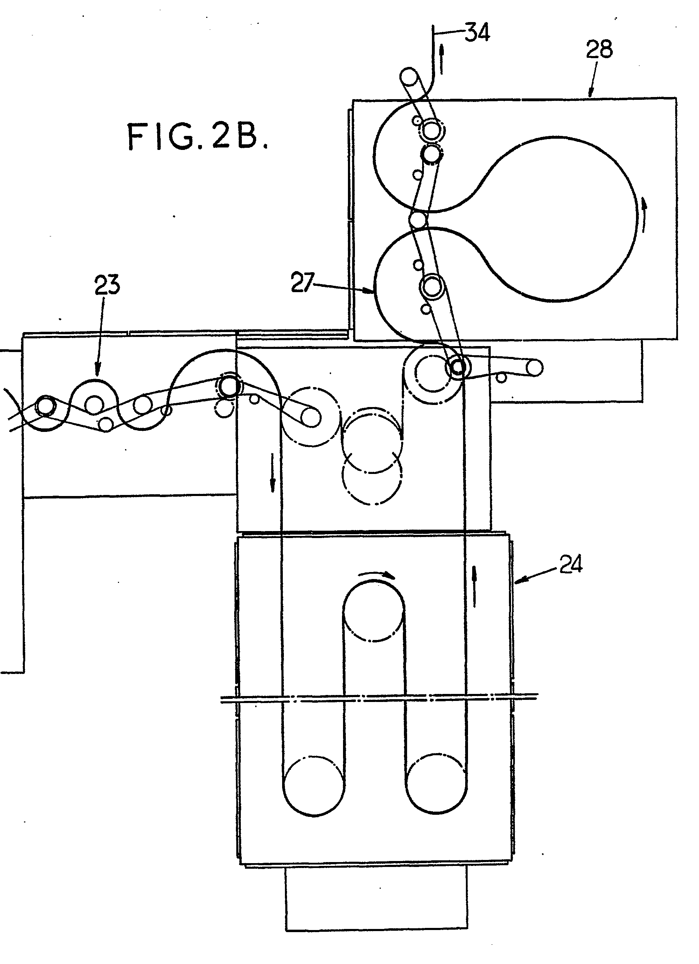

Comme représenté sur la figure 2A, le premier poste de chauffage 4 peut être agencé sous forme d'un carrousel quasi-circulaire (la zone de chauffage des goulots étant repérée par la référence 11 et la zone de refroidissement par la référence 12), à la sortie duquel les préformes 9 sont emmenées, par un transporteur 13, jusqu'à un second poste 14 de chauffage, lequel comporte une succession de fours à infra-rouges 15 agencés en forme d'un couloir ou d'un tunnel à l'intérieur duquel sont déplacées les préformes, les goulots 10 en PET cristallin de celles-ci étant protégés thermiquement au cours de cette opération. La température de chauffage est d'au moins 70-72°C (température de ramolissement du PET), de préférence de 100 à 120°C pendant 25 secondes.

Les préformes à corps chauffé sont ensuites emportées, par un transporteur 16, jusqu'à un premier poste de moulage 17 (lui aussi avantageusement agencé sous forme d'un carrousel). Le corps chaud 5 de la préforme est introduit dans une matrice 18 dont la cavité 19 présente une forme identique à celle du corps du récipient à obtenir, mais avec des dimensions sensiblement supérieures d'environ 20 % en hauteur et de 0 à 30 % transversalement. Plus spécifiquement, les bouteilles qui subiront une pasteurisation ultérieure sont moulées avec une dimension transversale égale à celle de la bouteille finale; par contre, les bouteilles qui seront remplies à chaud sont moulées avec une dimension transversale supérieure de 30 % à celle de la bouteille finale.

Le moulage s'effectue en introduisant un mandrin 20 à l'intérieur de la préforme 9 pour allonger axialement le corps 5 de celle-ci jusqu'au fond de la cavité 19 de la matrice, et en insufflant un fluide sous pression, par exemple de l'air comprimé avec d'abord un présoufflage sous environ 10 bars pour mettre sous tension le film de matériau, puis avec un soufflage sous 40 bars pour dilater le corps et l'appliquer contre les parois de la cavité 19, l'ensemble du cycle ayant une durée d'environ 3 à 10 secondes. Il est important de noter que, durant cette opération, les parois de la matrice sont refroidies, à l'air et/ou à l'eau, de manière que la température reste comprise entre 5 et 40°C, de préférence comprise entre 10°C et 15°C, le PET étant encore alors à une température de l'ordre de 90°C.

A la sortie du premier poste de moulage 17 est fourni un récipient intermédiaire 21 qui présente toujours le même goulot 10 et un corps 22 de dimensions sensiblement plus grandes (environ 20 % en hauteur et de 0 à 30 % tranversalement) que celles du récipient définitif à obtenir. Le récipient intermédiaire 21 est emporté par un transporteur 23 jusqu'à un troisième poste de chauffage 24 dans lequel il est soumis à une température de 180 à 220°C pendant une durée de 1 mn à 15 mn, de préférence 210°C pendant environ 1 mn 30 s. Là encore, seul le corps 22 du récipient intermédiaire 21 doit subir ce traitement thermique, et le goulot 10 doit être thermiquement isolé (température restant inférieure de préférence à 70°C).

A la sortie du troisième poste de chauffage 24, le récipient 25 (voir figure 3) a son corps 26 notablement déformé (surtout vers son fond qui a perdu sa forme hémisphérique) et rétracté. Il est acheminé, par un transporteur 27, jusqu'à un second poste de moulage 28 (lui aussi avantageusement agencé sous forme d'un carrousel). Le corps 26 du récipient 25 est introduit dans une matrice 29 dont la cavité 30 possède exactement la forme et les dimensions du corps du récipient à obtenir. L'opération se déroule comme précédemment: un mandrin 31 est introduit dans le corps 26 et déplacé pour allonger axialement celui-ci et le centrer sur le fond de la cavité 10; de l'air comprimé sous 40 bars est introduit pour dilater le corps 26 et lui faire épouser le contour de la cavité 30, la matrice étant à une température de 80°C à 100°C. La durée totale du cycle est de 2 à 6 secondes.

A la sortie du second poste de moulage 28 on recueille un récipient 32 dont le corps 33 possède sa forme et ses dimensions définitives. Dans le cas où ce récipient 32 possède un fond hémisphérique (comme c'est le cas pour la bouteille qui a été prise en considération sur les figures), il est ensuite acheminé, par un transporteur 34, vers un dernier poste de finition pour recevoir un culot 35 à fond plat conférant au récipient définitif 36 (voir figure 3) la stabilité requise en position verticale.

### Revendications

1. Procédé pour fabriquer des récipients tels que des bouteilles en polyéthylènetéréphtalate (PET) aptes à subir, ultérieurement, sans déformations notables, des conditions thermiques relativement sévères au cours de processus tels que leur remplissage par un liquide chaud ou la pasteurisation de leur contenu, ledit procédé comprenant la succession des étapes suivantes:

a) sur une préforme du récipient constituée en PET amorphe, avec le goulot du récipient déjà conformé à sa forme et à ses dimensions définitives, on effectue un traitement thermique du seul goulot dans des conditions de température et de durée propres à assurer la cristallisation du PET du goulot;

b) on chauffe le corps seul de la préforme (en excluant le goulot) à une température au moins égale à la température de ramollissement du PET;

c) on moule le corps de préfome chaud pour constituer un récipient intermédiaire;

d) on chauffe ensuite le corps seul de récipient intermédiaire;

e) puis enfin, le récipient intermédiaire chaud est moulé une nouvelle fois à sa forme et à ses dimension définitives;

procédé caractérisé en ce que:

— on moule (en 17) le corps (5) de préforme chaud pour constituer un récipient intermédiaire (21) dont le corps (22) possède des dimensions supérieures d'environ 20% en hauteur et de 0 à 30% transversalement aux dimensions du récipient définitif à obtenir, les parois de conformation par moulage du récipient intermédiaire (21) étant refroidies à une température d'environ 5 à 40°C.

— on chauffe ensuite (en 14) le corps seul (22) du récipient intermédiaire (21), pour obtenir un récipient chaud (25), à une température de 180 à 220°C pendant une durée d'environ 1 à 15 minutes;

— puis enfin, le récipient chaud (25) est moulé une nouvelle fois (en 28) à sa forme et à ses dimensions définitives pendant une durée de 1 à 6 secondes, les parois de confomation par moulage du récipient définitif (32) étant à une température de 80 à 100°C.

2. Procédé selon la revendication 1, caractérisé en ce qu'au cours de l'étape b) la température est d'environ 100 à 120°C, pendant une durée de 10 à 60 secondes, de préférence pendant environ 25 secondes.

3. Procédé selon la revendication 1 ou 2, caractérisé en ce que le moulage effectué à l'étape e) se déroule sous une température de 90 à 95°C pendant environ 4 secondes.

4. Procédé selon l'une quelconque des revendications 1 à 3, caractérisé en ce qu'au cours de l'étape d), le goulot (10) est maintenu à une température n'excédant pas 80°C, de préférence à une température d'environ 70°C.

5. Procédé selon l'une quelconque des revendications 1 à 4, caractérisé en ce que l'opération de moulage de l'étape c) est menée pendant une durée de 3 à 10 secondes, avec les parois de conformation par moulage refroidies à une température d'environ 10 à 15°C.

6. Procédé selon l'une quelconque des revendications 1 à 5, caractérisé en ce qu'au cours des opérations de moulage des étapes c) et e), on allonge mécaniquement le corps de la préforme ou du récipient, respectivement, pour qu'il occupe axialement toute la longueur de la matrice de moulage et on insuffle un fluide sous pression pour le dilater et lui faire épouser le contour des parois de la matrice de moulage.

7. Installation pour fabriquer des récipients, tels que des bouteilles, en polyéthylènetéréphtalate (PET) aptes à subir, ultérieurement, sans déformations notables, des conditions thermiques relativement sévères telles que celles rencontrées au cours de processus tels que leur remplissage avec un liquide chaud ou la pasteurisation de leur contenu, caractérisée en ce qu'elle comprend :

- un premier dispositif de chauffage (4) agencé pour chauffer le seul goulot (2), déjà conformé à sa forme et à ses dimensions définitives, d'une préforme du récipient (1) constituée en PET amorphe, ce dispositif de chauffage (4) étant apte à engendrer une température propre à assurer la cristallisation du PET du goulot et étant en outre agencé pour assurer une protection thermique du corps du récipient afin d'empêcher son échauffement ;

  - des moyens de refroidissement relativement lent du goulot ;

  - un deuxième dispositif de chauffage (14) pour chauffer le corps seul (5) de la préforme (9) (à l'exclusion du goulot) à une température supérieure à la température de ramollissement du PET ;

  - une première matrice de moulage (18) pour former le corps d'un récipient intermédiaire (21) à partir du corps (5) de la préforme (9), la première matrice de moulage possédant une cavité de moulage (19) ayant des dimensions supérieures d'environ 20 % en hauteur et de 0 à 30 % transversalement aux dimensions du récipient définitif à obtenir, cette première matrice étant équipée de moyens de refroidissement des parois de la cavité à une température d'environ 5 à 40°C ;

  - un troisième dispositif de chauffage pour chauffer le corps seul (22) du récipient intermédiaire (21) (à l'exclusion du goulot) à une température d'environ 180 à 220°C ; et

  - une seconde matrice de moulage (29) pour former le corps du récipient définitif à partir du corps chauffé (25) du récipient intermédiaire (26), cette seconde matrice de moulage possédant une cavité de moulage (30) ayant les dimensions correspondant à celles du corps du récipient définitif et étant munie de moyens de chauffage des parois de la cavité à une température d'environ 80 à 100°C.

8. Installation selon la revendication 7, caractérisée en ce qu'au premier et/ou au deuxième et/ou au troisième dispositif de chauffage sont associés des moyens de protection thermique, et éventuellement des moyens de refroidissement, agencé pour protéger thermiquement la partie (goulot ou corps) du récipient qui ne doit pas être traitée thermiquement.

9. Installation selon la revendication 7 ou 8, caractérisée en ce que la première et/ou la seconde matrice de moulage peut comporter un mandrin (20, 31) déplaçable axialement à l'intérieur de la cavité de moulage (19, 30) afin d'allonger longitudinalement le corps du récipient, ainsi que des moyens d'insufflation d'un fluide sous pression à l'intérieur du corps du récipient afin de dilater celui-ci contre les parois de la cavité de moulage (19, 30).

**Patentansprüche**

1. Verfahren zur Herstellung von Behältern, wie etwa Flaschen, aus Polyethylenterephthalat (PET), die in der Lage sind, im Verlaufe von Vorgängen wie ihrer Füllung mit einer heißen Flüssigkeit oder der Pasteurisierung ihres Inhaltes, ohne nennenswerte Verformungen verhältinismäßig starke thermische Belastungen auszuhalten, wobei das Verfahren nacheinander folgende Schritte umfaßt:

  a) an einem aus amorphem PET bestehenden Vorformling des Behälters, dessen Hals bereits seine thermische Behandlung allein des Halses bei einer Temperatur und über einen Zeitraum durchgeführt, die geeignet sind, die Kristallisation des PET des Halses zu gewährleisten;

  b) der Körper des Vorformlings allein (unter Ausschluß des Halses) wird auf eine Temperatur wenigstens gleich der Erweichungstemperatur des PET erwärmt;

  c) der Körper des warmen Vorformlings wird geformt, so daß ein Zwischenbehälter gebildet wird;

  d) der Körper allein des Zwischenbehälters wird erwärmt;

  e) und schließlich wird der warme Zwischenbehälter ein weiteres Mal auf seine endgültige Form und Größe geformt;

dadurch gekennzeichnet, daß

  – der Körper (5) des warmen Vorformlings (in 17) geformt wird, so daß ein Zwischenbehälter (21) gebildet wird, dessen Körper (22) Abmessungen aufweist, die um etwa 20% in der Höhe und 0 bis 30% in der Breite größer sind als die Abmessungen des engültig zu erhaltenden Behälters, wobei die Formwände für den Zwischenbehälter (21) auf eine Temperatur von etwa 5 bis 40°C abgekühlt werden;

  –anschließend (in 14) allein der Körper (22) des Zwischenbehälters (21) bei einer Temperatur von 180 bis 220°C über einen Zeitraum von etwa 1 bis 15 Minuten erwärmt wird, um einen warmen Behälter (25) zu erhalten

  – und schließlich der warme Behälter (25) ein weiteres Mal (in 28) über einen Zeitraum von 1 bis 6 Sekunden geformt wird, bis er seine endgültige Form und Größe erreicht, wobei die Formwände für den engültigen Behälter (32) eine Temperatur von 80 bis 100°C auweisen.

2. Verfahren nach Anspruch 1, dadurch gekennzeichnet, daß im Verlaufe des Arbeitsschrittes b) die Temperatur über einen Zeitraum von 10 bis 60 Sekunden, vorzugsweise etwa 25 Sekunden lang, etwa 100 bis 120°C beträgt.

3. Verfahren nach Anspruch 1 oder 2, daurch gekennzeichnet, daß die Formgebung im Arbeitsschritt e) bei einer Temperatur von 90 bis 95°C während etwa 4 Sekunden durchgeführt wird.

4. Verfahren nach einem der Ansprüche 1 bis 3, dadurch gekennzeichnet, daß der Hals (10) im Arbeitsschritt d) auf einer Temperatur von ungefähr 70°C, gehalten wird.

5. Verfahren nach einem der Ansprüche 1 bis 4, dadurch gekennzeichnet, daß die Formgebung des Arbeisschrittes c) während einer Zeitdauer von 3 bis 10 Sekunden durchgeführt wird, wobei die Formwände auf eine Temperatur von etwa 10 bis 15°C abgekühlt werden.

6. Verfahren nach einem der Ansprüche 1 bis 5, dadurch gekennzeichnet, daß im Verlaufe der Formgebung in den Arbeitsschritten c) und e) der Körper des Vorformlings bzw. des Behälters mechanisch gelängt wird, damit er in axialer Richtung die gesamte Länge der Formmatrize ausfüllt, und daß ein Fluid unter Druck eingeblasen wird, damit der Körper aufgeweitet wird und sich an die Kontur der Wände der Formmatrize anschmiegt.

7. Vorrichtung zur Herstellung von Behältern, wie etwa Flaschen, aus Polyethylenterephthalat (PET), die in der Lage sind, ohne nachfolgende nennenswerte Verformungen verhältnismäßig starke thermischen Belastungen auszuhalten, wie sie im Verlaufe von Vorgängen wie ihrer Füllung mit einer heißen Flüssigkeit oder der Pasteurisierung ihres Inhaltes auftreten, gekennzeichnet durch

- eine erste Heizvorrichtung (4) zur Erwärmung allein des bereits seine endgültige Form und Größe aufweisenden Halses (2) eines aus amorphem PET bestehenden Vorformlings des Behälters (1), wobei die Heizvorrichtung (4) eine Temperatur zur Kristallisation des PET des Halses erzeugt, und außerdem so ausgebildet ist, daß sie ausreichenden Wärmeschutz für den Körper des Behälters bietet, damit dieser nicht erwärmt werden kann;
- Einrichtungen zur verhältnismäßig langsamen Abkühlung des Halses;
- eine zweite Heizvorrichtung (14) zur Erwärmung allein des Körpers (5) des Vorformlings (9) (unter Ausschluß des Halses) auf eine Temperatur oberhalb der Erweichungstemperatur des PET;
- eine erste Formmatrize (18) zur Formung des Körpers eines Zwischenbehälters (21) aus dem Körper (5) des Vorformlings (9), wobei die erste Formmatrize einen Matrizenhohlraum (19), mit Abmessungen größer als etwa 20% in der Höhe und 0 bis 30% in der Breite als die Abmessungen des Endbehälters aufweist und mit Einrichtungen zur Abkühlung der Wände des Hohlraumes auf eine Temperatur von etwa 5 bis 40°C versehen ist;
- eine dritte Heizvorrichtung zur Erwärmung allein des Körpers (22) des Zwischenbehälters (21) (unter Ausschluß des Halses) auf eine Temperatur von etwa 180 bis 220°C; und
- eine zweite Formmatrize (29) zur Formung des Körpers des endgültigen Behälters aus dem erwärmten Körper (25) des Zwischenbehälters (26), wobei die zweite Formmatrize einen Matrizenhohlraum (30) aufweist, dessen Abmessungen denen des Körpers des engültigen Behälters entsprechen und der Einrichtungen zur Erwärmung der Wände des Hohlraumes auf eine Temperatur von etwa 80 bis 100°C aufweist.

8. Vorrichtung nach Anspruch 7, dadurch gekennzeichnet, daß der ersten und/oder zweiten und/oder dritten Heizvorrichtung Wärmeschutzeinrichtungen und gegebenenfalls Abkühleinrichtungen zugeordnet sind, die dazu vorgesehen sind, denjenigen Teil (Hals oder Körper) des Behälters, der nicht wärmebehandelt werden soll, vor Wärme zu schützen.

9. Vorrichtung nach Anspruch 7 oder 8, dadurch gekennzeichnet, daß die erste und/oder zweite Formmatrize einen im Inneren des Matrizenhohlraumes (19, 30) axial beweglichen Dorn (20, 31) aufweisen kann, um den Körper des Behälters der Länge nach auszudehnen, sowie ferner Einrichtungen zum Einblasen eines Fluids unter Druck in das Innere der Körpers des Behälters, um diesen zu den Wänden des Matrizenhohlraumes (19, 30) hin aufzuweiten.

## Claims

1. A process for the manufacture of containers such as bottles from polyethylene terephtahalate (PET) which are capable of subsequently withstanding relatively severe heating conditions without appreciable deformation in the course of processes such as their filling with a hot liquid or the pasteurisation of their contents, the said process comprising the following stages in sequence:

a) a container preform consisting of amorphous PET wherein the neck of the container already conforms to its final shape and dimensions is subjected to heat treatment of the neck only at a temperature and for a time sufficient to ensure crystallisation of the PET in the neck,

b) the body only of the preform (exluding the neck) is heated to a temperature equal to at least the softening temperature of the PET,

c) the body of the hot proform is moulded to form an intermediate container,

d) the body only of the intermediate container is then heated,

e) and then finally the hot intermediate container is again moulded to its final shape and dimensions, the process being characterised in that:

- the body (5) of the hot preform is moulded (in 17) to form an intermediate container (21) of which the body (22) has dimensions some 20% greater in height and from 0 to 30% greater transversely than the dimensions of the final container which is to be obtained, the mould walls of the intermediate container (21) being cooled to a temperature of around 5 to 40°C,

- the body (22) only of the intermediate container (21) is then heated (in 14) to obtain a hot container (25) at a temperature of 180 to 220°C, over a period of some 1 to 15 minutes,

- then finally the hot container (25) is moulded again (in 28) to its final shape and dimensions over a period of between 1 and 6 seconds, the mould walls for moulding the final container (32) being at a temperature of 80 to 100°C.

2. A process according to claim 1, characterised that in the course of stage b) the temperature is around 100 to 120°C for a period of 10 to 60 seconds, preferably of some 25 seconds.

3. A process according to claim 1 or 2, characterised in that the moulding performed in stage e) takes place at a temperature of 90 to 95°C over some 4 seconds.

4. A process according to any one of claims 1 to 3, characterised in that the course of stage d) the neck (10) is held at a temperature which does not exceed 80°C, preferably at a temperature of around 70°C.

5. A process according to any one of claims 1 to 4, characterised in that the moulding operation in stage c) is performed during a period of 3 to 10 seconds, with the mould walls cooled to a temperature of some 10 to 15°C.

6. A process according to any one of claims 1 to 5, characterised in that in the course of the moulding operations in stages c) and e) the body of the preform or container respectively is elongated mechanically so that it occupies the entire axial length of the moulding die and fluid under pressure is blown in to expand it and cause it to take up the shapes of the walls of the moulding die.

7. Apparatus for the manufacture of containers, such as bottles, from polyethylene terephthalate (PET) which are subsequently able to withstand relatively severe heating conditions without appreciable deformation such as those encountered in the course of processes such as their being filled with a hot liquid or the pasteurisation of their contents, characterised in that it comprises:

    – a first heating means (4) designed to heat only the neck (2), which has already received its final shape and dimensions, of a container preform (1) consisting of amorphous PET, this heating means (4) being capable of producing a temperature sufficient to ensure crystallisation of the PET in the neck and also being designed to protect the body of the container from heat in order to prevent it from heating up,

    – means for cooling the neck relatively slowly,

    – a second heating means (14) to heat the body (5) only of the preform (9) (excluding the neck) to a temperature above the softening temperature of the PET;

    – a first moulding die (18) to form the body of an intermediate container (21) from the body (5) of the preform (9), the first moulding die having a mould cavity (19) with dimensions some 20% greater in height and 0 to 30% greater transversely than the dimensions of the final container which is to be obtained, this first die being equipped with means for cooling the walls of the cavity to a temperature of some 5 to 40°C,

    – a third heating means for heating the body (22) only of the intermediate container (21) (excluding the neck) to a temperature of some 180 to 220°C, and

    – a second moulding die (29) to form the body of the final container from the heated body (25) of the intermediate container (26), this second moulding die having a mould cavity (30) of dimensions corresponding to those of the final container and being equipped with means for heating the walls of the cavity to a temperature of some 80 to 100°C.

8. Apparatus according to claim 7, characterized in that means for protecting against heat, and possibly means of cooling, arranged so as to protect from heat that part (neck or body) of the container which is not to be subjected to heat treatment, are associated with the first and/or the second and/or the third means of heating.

9. Apparatus according to claim 7 or 8, characterized in that the first and/or the second moulding die may incorporate a mandrel (20, 31) which can be displaced axially within the mould cavity (19, 30) so as to extend the body of the container longitudinally, as well as means for blowing a pressurized fluid into the interior of the body of the container in order to expand the latter against the walls of the mould cavity (19, 30).

FIG.1A.

FIG.1B.

EP 0 237 459 B1

FIG.1C.

EP 0 237 459 B1

FIG. 2A.

FIG.2B.

FIG. 3.

5

1

2

5

9

10

21

22

25

26

10

33

32

10

36

35

10

EP 0 237 459 B1